# EUROPÄISCHE PATENTSCHRIFT

(11) **EP 3 629 232 B1**
(45) Veröffentlichungstag und Bekanntmachung des Hinweises auf die Patenterteilung: **21.10.2026**
(21) Anmeldenummer: 19194229.1
(22) Anmeldetag: 29.08.2019
(51) Int. Cl.: G06V 40/40, G06V 10/82, G06V 40/16, G06V 30/19, G06V 30/413

(54) **VORRICHTUNG ZUM ERKENNEN EINER BILDMANIPULATION IN EINEM DIGITALEN REFERENZGESICHTSBILD EINER PERSON**
DEVICE FOR DETECTING IMAGE MANIPULATION IN A DIGITAL REFERENCE FACE IMAGE OF A PERSON
DISPOSITIF DE DÉTECTION D'UNE MANIPULATION D'IMAGE DANS UNE IMAGE DE VISAGE NUMÉRIQUE DE RÉFÉRENCE D'UNE PERSONNE

(30) Priorität: 26.09.2018 DE 102018123719
(43) Veröffentlichungstag der Anmeldung: 01.04.2020
(73) Patentinhaber: Bundesdruckerei GmbH, 10969 Berlin (DE); Otto-von-Guericke-Universität Magdeburg, 39106 Magdeburg (DE); Fraunhofer-Gesellschaft zur Förderung der angewandten Forschung e.V., 80686 München (DE)
(72) Erfinder: WOLF, Andreas, 13158 Berlin (DE); RABELER, Uwe, 30453 Hannover (DE); OJDANIC, Darko, 28357 Bremen (DE); DITTMANN, Jana, 06846 Dessau (DE); KRAETZER, Christian, 04416 Markkleeberg (DE); EISERT, Peter, 14169 Berlin (DE); SEIBOLD, Clemens, 10559 Berlin (DE); GARCIA, Raul Vicente, 13359 Berlin (DE); WANDZIK, Lukasz, 10627 Berlin (DE)
(74) Vertreter: Patentship Patentanwaltsgesellschaft mbH

(56) Entgegenhaltungen:
- WO-A1-2017/210419
- US-A1- 2014 363 057
- US-B1- 7 114 079
- SCHERHAG ULRICH ET AL: "Towards Detection of Morphed Face Images in Electronic Travel Documents", 2018 13TH IAPR INTERNATIONAL WORKSHOP ON DOCUMENT ANALYSIS SYSTEMS (DAS), IEEE, 24 April 2018 (2018-04-24), pages 187 - 192, XP033364364, [retrieved on 20180622], DOI: 10.1109/DAS.2018.11
- ZHANG LE-BING ET AL: "Face Morphing Detection Using Fourier Spectrum of Sensor Pattern Noise", 2018 IEEE INTERNATIONAL CONFERENCE ON MULTIMEDIA AND EXPO (ICME), 23 July 2018 (2018-07-23), IEEE, Piscataway, NJ, USA, pages 1 - 6, XP033417682, [retrieved on 20181008], DOI: 10.1109/ICME.2018.8486607
- KRAETZER CHRISTIAN KRAETZER@OVGU DE ET AL: "Modeling Attacks on Photo-ID Documents and Applying Media Forensics for the Detection of Facial Morphing", 20170620; 20170620 - 20170622, 20 June 2017 (2017-06-20), New York, NY, USA, pages 21 - 32, XP058451408, ISBN: 978-1-4503-5061-7, DOI: 10.1145/3082031.3083244

## Beschreibung

### TECHNISCHES GEBIET

Die vorliegende Erfindung betrifft das Gebiet der Prüfung eines Referenzgesichtsbildes einer Person, welches in einem Identitätsdokument der Person gespeichert ist.

### TECHNISCHER HINTERGRUND

Die Offenlegungsschrift WO 2017/210419 A1 offenbart eine Vorrichtung zum Identifizieren einer Person.

Die Patentschrift US 7,114,079 B1 offenbart ein kartenbasiertes Sicherheitssystem.

Das Dokument "SCHERHAG ULRICH ET AL: "Towards Detection of Morphed Face Images in Electronic Travel Documents", 2018 13TH IAPR INTERNATIONAL WORKSHOP ON DOCUMENT ANALYSIS YSIS SYSTEMS (DAS), IEEE, 24. April 2018 (2018-04-24), Seiten 187-192, XP033364364, DOI: 10.1109/DAS.2018.11 [gefunden am 2018-06-22]" offenbart ein Detektionsverfahren zum Detektieren einer Bildmanipulation eines Gesichtsbildes eines elektronischen Reisedokuments, wobei die Bildmanipulation ein Morphing ist.

Das Dokument "ZHANG LE-BING ET AL: "Face Morphing Detection Using Fourier Spectrum of Sensor Pattern Noise", 2018 IEEE INTERNATIONAL CONFERENCE ON MULTIMEDIA AND EXPOSURE (ICME), 23. Juli 2018 (2018-07-23), Seiten 1-6, XP033417682, IEEE, Piscataway, NJ, USA DOI: 10.1109/ICME.2018.8486607 [gefunden am 2018-10-08]" offenbart ein Erkennen eines Gesichts-Morphing unter Verwendung eines Fourier-Spektrums eines Sensormusterrauschens.

Das Dokument "KRAETZER CHRISTIAN KRAETZER@OVGU DE ET AL: "Modeling Attacks on Photo-ID Documents and Applying Media Forensics for the Detection of Facial Morphing", 20170620; 20170620 - 20170622, 20. Juni 2017 (2017-06-20), Seiten 21-32, XP058451408, New York, NY, USA DOl: 10.1145/3082031.3083244 ISBN: 978-1-4503-5061-7" offenbart eine Modellierung von Attacken oder Angriffen auf Ausweisdokumente.

Bei der Prüfung einer Identität einer Person erfolgt typischerweise ein Vergleich eines Referenzgesichtsbildes der Person, welches auf einem Identitätsdokument der Person aufgebracht oder digital in dem Identitätsdokument gespeichert ist, mit einem Gesicht bzw. Gesichtsbild der Person.

Neuere Studien deuten darauf hin, dass es einfach möglich sein kann, aus digitalen Referenzgesichtsbildern annähernd ähnlich aussehender Personen ein gemeinsames digitales Referenzgesichtsbild mittels einer Bildmanipulation zu erzeugen, welches sowohl bei manueller Inspektion durch Grenzkontrollbeamte oder forensische Experten als auch bei automatischer Inspektion durch Zutrittskontrollsysteme zu allen Personen passen kann. Eine derartige Bildmanipulation kann beispielsweise ein Morphing umfassen, bei welchem ein Zwischenübergang zwischen mehreren digitalen Referenzgesichtsbildern berechnet wird. Damit ist es beispielsweise möglich, ein Identitätsdokument zu beantragen, welches von mehreren Personen benutzt werden kann, da das gemeinsame digitale Referenzgesichtsbild auf all diese Personen biometrisch passt. Dadurch ergeben sich Herausforderungen insbesondere für die Zuverlässigkeit automatisierter Zutrittskontrollsysteme.

Ein klassischer Ansatz zur Lösung dieses Problems besteht darin, bei der Beantragung des Identitätsdokumentes technisch oder organisatorisch auszuschließen, dass manipulierte digitale Referenzgesichtsbilder akzeptiert und in ein Identifikationsdokument eingebracht werden. Im Falle von Reisepässen als Identitätsdokumenten ließe sich dieser Ansatz beispielsweise jedoch nur dann realisieren, wenn alle ausstellenden Länder bzw. Behörden weltweit derart vorgehen würden. Dies ist jedoch in der Praxis schwierig sicherzustellen. Eine durch einen Hersteller an eine Datengruppe angebrachte elektronische Signatur enthält typischerweise ebenfalls keinen Hinweis darauf, wie das digitale Referenzgesichtsbild ursprünglich erzeugt bzw. ob dieses nachträglich manipuliert wurde.

### BESCHREIBUNG DER ERFINDUNG

Es ist eine Aufgabe der vorliegenden Erfindung, ein effizientes Konzept zum Erkennen einer Bildmanipulation in einem digitalen Referenzgesichtsbild einer Person zu schaffen.

Diese Aufgabe wird durch die Merkmale der unabhängigen Ansprüche gelöst. Vorteilhafte Ausführungsformen der Erfindung sind Gegenstand der Beschreibung, der Zeichnungen sowie der abhängigen Ansprüche.

Die vorliegende Erfindung basiert auf der Erkenntnis, dass die obige Aufgabe durch einen Vergleich eines ausgelesenen digitalen Referenzgesichtsbildes der Person mit einem erfassten Gesichtsbild der Person, beispielsweise an einem Zutrittskontrollsystem, gelöst werden kann. Dabei kann zumindest ein biometrisches Referenzmerkmal in dem digitalen Referenzgesichtsbild bzw. zumindest ein biometrisches Merkmal in dem Gesichtsbild erfasst werden, und ein Manipulationsindikator bestimmt werden, welcher einen Grad der Bildmanipulation in dem digitalen Referenzgesichtsbild repräsentiert. Der Manipulationsindikator repräsentiert eine Konfidenz bzw. eine Wahrscheinlichkeit für das Vorliegen der Bildmanipulation.

Zudem können weitere Ansätze zur Bestimmung weiterer Manipulationsindikatoren zum Einsatz kommen, wobei der Manipulationsindikator und die weiteren Manipulationsindikatoren gemeinsam zum Erkennen der Bildmanipulation ausgewertet werden können. Die gemeinsame Auswertung kann beispielsweise mittels eines statistischen Ansatzes oder mittels eines neuronalen Netzes erfolgen.

Dadurch wird erreicht, dass eine Bildmanipulation in dem digitalen Referenzgesichtsbild der Person effizient erkannt werden kann. Insbesondere kann dadurch die Zuverlässigkeit von Zutrittskontrollsystemen erhöht werden.

Gemäß einem ersten Aspekt betrifft die Erfindung eine Vorrichtung zum Erkennen einer Bildmanipulation in einem digitalen Referenzgesichtsbild einer Person gemäß Anspruch 1.

Die Bildmanipulation umfasst ein Morphing, bei welchem ein Zwischenübergang zwischen unterschiedlichen digitalen Referenzgesichtsbildern berechnet wird. Das Morphing kann beispielsweise ein Warping, ein Tweening, und/oder ein Cross-Dissolving umfassen. Die Bildmanipulation umfasst aber auch jede andere Form von Bildmanipulation, namentlich eine geometrische Bildverzerrung oder eine Texturveränderung.

Das Identitätsdokument kann beispielsweise ein Reisepass, ein Personalausweis, ein Visum, ein Zugangskontrollausweis, ein Berechtigungsausweis, ein Unternehmensausweis, ein Steuerzeichen, ein Ticket, eine Geburtsurkunde, ein Führerschein, ein Kraftfahrzeugausweis, ein Zahlungsmittel, eine Bankkarte, oder eine Kreditkarte sein. Das Identitätsdokument kann beispielsweise ein maschinenlesbares Reisedokument (Machine Readable Travel Document, MRTD) oder ein elektronisch maschinenlesbares Reisedokument (Electronic Machine Readable Travel Document, eMRTD) sein.

Das Identitätsdokument kann einen elektronischen Speicher umfassen, in welchem das digitale Referenzgesichtsbild gespeichert ist. Das digitale Referenzgesichtsbild kann einer vorbestimmten Datengruppe, beispielsweise einer Datengruppe 2 (DG2), zugeordnet sein.

Erfindungsgemäß ist die Erkennungseinrichtung ferner ausgebildet, ein weiteres biometrisches Referenzmerkmal in dem digitalen Referenzgesichtsbild zu erfassen, ein weiteres biometrisches Merkmal in dem digitalen Gesichtsbild der Person zu erfassen, das weitere biometrische Referenzmerkmal mit dem weiteren biometrischen Merkmal zu vergleichen, um einen dritten Manipulationsindikator zu erhalten, und die Bildmanipulation in dem digitalen Referenzgesichtsbild ferner auf der Basis des dritten Manipulationsindikators zu erkennen. Dadurch wird der Vorteil erreicht, dass ein weiterer Manipulationsindikator zum Erkennen der Bildmanipulation berücksichtigt werden kann.

Erfindungsgemäß umfasst die Vorrichtung eine Datenbank, in welcher ein biometrisches Vergleichsreferenzmerkmal gespeichert ist, wobei die Erkennungseinrichtung ferner ausgebildet ist, das biometrische Referenzmerkmal mit dem biometrischen Vergleichsreferenzmerkmal zu vergleichen, um einen zweiten Manipulationsindikator zu erhalten, und die Bildmanipulation in dem digitalen Referenzgesichtsbild ferner auf der Basis des zweiten Manipulationsindikators zu erkennen. Das biometrische Vergleichsmerkmal kann typische biometrische Eigenschaften menschlicher Gesichter repräsentieren. Dadurch wird der Vorteil erreicht, dass ein weiterer Manipulationsindikator zum Erkennen der Bildmanipulation berücksichtigt werden kann.

Gemäß einer Ausführungsform ist das biometrische Merkmal und/oder das weitere biometrische Merkmal eines der folgenden biometrischen Merkmale: ein Augenabstand der Person, eine Augenfarbe der Person, eine Augenbreite der Person, eine Augenhöhe der Person, eine Nasenhöhe der Person, eine Nasenbreite der Person, ein Ohrenabstand der Person, eine Ohrenbreite der Person, eine Ohrenhöhe der Person, eine Mundhöhe der Person, eine Mundbreite der Person, eine Stirnhöhe der Person, eine Stirnbreite der Person, oder ein Wangenabstand der Person. Dadurch wird der Vorteil erreicht, dass charakteristische Eigenschaften menschlicher Gesichter berücksichtigt werden können.

Gemäß einer Ausführungsform ist das biometrische Referenzmerkmal und/oder das weitere biometrische Referenzmerkmal eines der folgenden biometrischen Referenzmerkmale: ein Referenzaugenabstand der Person, eine Referenzaugenfarbe der Person, eine Referenzaugenbreite der Person, eine Referenzaugenhöhe der Person, eine Referenznasenhöhe der Person, eine Referenznasenbreite der Person, ein Referenzohrenabstand der Person, eine Referenzohrenbreite der Person, eine Referenzohrenhöhe der Person, eine Referenzmundhöhe der Person, eine Referenzmundbreite der Person, eine Referenzstirnhöhe der Person, eine Referenzstirnbreite der Person, oder ein Referenzwangenabstand der Person. Dadurch wird der Vorteil erreicht, dass charakteristische Eigenschaften menschlicher Gesichter berücksichtigt werden können.

Gemäß einer Ausführungsform ist das biometrische Vergleichsreferenzmerkmal eines der folgenden biometrischen Vergleichsreferenzmerkmale: ein Vergleichsreferenzaugenabstand der Person, eine Vergleichsreferenzaugenfarbe der Person, eine Vergleichsreferenzaugenbreite der Person, eine Vergleichsreferenzaugenhöhe der Person, eine Vergleichsreferenznasenhöhe der Person, eine Vergleichsreferenznasenbreite der Person, ein Vergleichsreferenzohrenabstand der Person, eine Vergleichsreferenzohrenbreite der Person, eine Vergleichsreferenzohrenhöhe der Person, eine Vergleichsreferenzmundhöhe der Person, eine Vergleichsreferenzmundbreite der Person, eine Vergleichsreferenzstirnhöhe der Person, eine Vergleichsreferenzstirnbreite der Person, oder ein Vergleichsreferenzwangenabstand der Person. Dadurch wird der Vorteil erreicht, dass charakteristische Eigenschaften menschlicher Gesichter berücksichtigt werden können.

Gemäß einer Ausführungsform ist die Erkennungseinrichtung ferner ausgebildet, das digitale Referenzgesichtsbild in einen Transformationsraum, insbesondere einen Frequenzraum, zu transformieren, um ein transformiertes digitales Referenzgesichtsbild zu erhalten, das digitale Gesichtsbild in den Transformationsraum, insbesondere den Frequenzraum, zu transformieren, um ein transformiertes digitales Gesichtsbild zu erhalten, das transformierte digitale Referenzgesichtsbild mit dem transformierten digitalen Gesichtsbild zu vergleichen, um einen vierten Manipulationsindikator zu erhalten, und die Bildmanipulation in dem digitalen Referenzgesichtsbild ferner auf der Basis des vierten Manipulationsindikators zu erkennen. Dadurch wird der Vorteil erreicht, dass Eigenschaften des digitalen Referenzgesichtsbildes und des digitalen Gesichtsbildes verglichen werden können, welche in dem Transformationsraum, insbesondere dem Frequenzraum, deutlicher hervortreten. Beispielsweise können regelmäßige Oberflächenstrukturen in dem Frequenzraum effizienter verglichen werden.

Gemäß einer Ausführungsform ist die Erkennungseinrichtung ferner ausgebildet, ein Referenzbildmerkmal in dem digitalen Referenzgesichtsbild zu erfassen, ein Bildmerkmal in dem digitalen Gesichtsbild zu erfassen, eine Differenz zwischen einer Referenzlage des Referenzbildmerkmals in dem digitalen Referenzgesichtsbild und einer Lage des Bildmerkmals in dem digitalen Gesichtsbild zu bestimmen, um einen fünften Manipulationsindikator zu erhalten, und die Bildmanipulation in dem digitalen Referenzgesichtsbild ferner auf der Basis des fünften Manipulationsindikators zu erkennen. Zum Bestimmen des Referenzbildmerkmals und/oder des Bildmerkmals kann beispielsweise ein Merkmalsextraktionsalgorithmus eingesetzt werden. Dadurch wird der Vorteil erreicht, dass charakteristische Eigenschaften des digitalen Referenzgesichtsbildes und des digitalen Gesichtsbildes berücksichtigt werden können.

Gemäß einer Ausführungsform ist das Bildmerkmal eines der folgenden Bildmerkmale: eine Ecke in dem digitalen Gesichtsbild, oder eine Kante in dem digitalen Gesichtsbild. Dadurch wird der Vorteil erreicht, dass charakteristische Eigenschaften digitaler Bilder berücksichtigt werden können. Das Bildmerkmal kann jedoch auch jedes andere geeignete Bildmerkmal sein, welches durch einen Merkmalsextraktionsalgorithmus bereitgestellt werden kann.

Gemäß einer Ausführungsform ist das Referenzbildmerkmal eines der folgenden Referenzbildmerkmale: eine Referenzecke in dem digitalen Referenzgesichtsbild, eine Referenzkante in dem digitalen Referenzgesichtsbild. Dadurch wird der Vorteil erreicht, dass charakteristische Eigenschaften digitaler Bilder berücksichtigt werden können. Das Referenzbildmerkmal kann jedoch auch jedes andere geeignete Referenzbildmerkmal sein, welches durch einen Merkmalsextraktionsalgorithmus bereitgestellt werden kann.

Gemäß einer Ausführungsform ist die Erkennungseinrichtung ferner ausgebildet, eine Bildmanipulation unter Verwendung des digitalen Referenzgesichtsbildes und des digitalen Gesichtsbildes durchzuführen, um ein manipuliertes digitales Referenzgesichtsbild zu erhalten, das digitale Referenzgesichtsbild mit dem manipulierten digitalen Referenzgesichtsbild zu vergleichen, um einen sechsten Manipulationsindikator zu erhalten, und die Bildmanipulation in dem digitalen Referenzgesichtsbild ferner auf der Basis des sechsten Manipulationsindikators zu erkennen. Dadurch wird der Vorteil erreicht, dass eine Auswirkung einer Bildmanipulation berücksichtigt werden kann.

Gemäß einer Ausführungsform ist die Erkennungseinrichtung ferner ausgebildet, einen Grad eines Verzerrungsartefakts der Bildmanipulation, insbesondere einer Doppelung oder einer Verschmierung, in dem digitalen Referenzgesichtsbild zu erfassen, um einen weiteren Manipulationsindikator zu erhalten, und die Bildmanipulation in dem digitalen Referenzgesichtsbild ferner auf der Basis des weiteren Manipulationsindikators zu erkennen.

Dadurch wird der Vorteil erreicht, dass typische Verzerrungsartefakte von Bildmanipulationen berücksichtigt werden können.

Gemäß einer Ausführungsform ist die Erkennungseinrichtung ausgebildet, ein statistisches Referenzmerkmal in dem digitalen Referenzgesichtsbild zu erfassen, ein statistisches Merkmal in dem digitalen Gesichtsbild der Person zu erfassen, das statistische Referenzmerkmal mit dem statistischen Merkmal zu vergleichen, um einen weiteren Manipulationsindikator zu erhalten, und die Bildmanipulation in dem digitalen Referenzgesichtsbild ferner auf der Basis des weiteren Manipulationsindikators zu erkennen. Dadurch wird der Vorteil erreicht, dass statistische Eigenschaften des digitalen Referenzgesichtsbildes und des digitalen Gesichtsbildes berücksichtigt werden können.

Erfindungsgemäß ist die Erkennungseinrichtung ferner ausgebildet, die Bildmanipulation in dem digitalen Referenzgesichtsbild unter Verwendung eines neuronalen Netzes zu erkennen, wobei das neuronale Netz eine Eingangsschicht mit einem ersten Eingang, einem zweiten Eingang und einem dritten Eingang aufweist, wobei das neuronale Netz eine Ausgangsschicht mit einem Ausgang aufweist, wobei der erste Manipulationsindikator dem ersten Eingang zugeordnet ist, wobei der zweite Manipulationsindikator dem zweiten Eingang zugeordnet ist, wobei der dritte Manipulationsindikator dem dritten Eingang zugeordnet ist, und wobei der Ausgang die Bildmanipulation in dem digitalen Referenzgesichtsbild anzeigt. Die Manipulationsindikatoren repräsentieren jeweils eine Konfidenz bzw. eine Wahrscheinlichkeit für das Vorliegen der Bildmanipulation. Dadurch wird der Vorteil erreicht, dass eine gemeinsame Auswertung der Manipulationsindikatoren mittels eines neuronalen Netzes erfolgen kann.

Das neuronale Netz kann eine Mehrzahl von Neuronen umfassen, wobei jedem Neuron der Mehrzahl von Neuronen jeweils ein Gewichtswert zugeordnet ist. Das neuronale Netz kann vorab, beispielsweise mittels eines Deep Learning Ansatzes, trainiert worden sein, um die jeweiligen Gewichtswerte zu bestimmen. Das Training kann beispielsweise auf Grundlage einer Mehrzahl vorbekannter digitaler Referenzgesichtsbilder mit bewusst eingebrachten Bildmanipulationen erfolgen.

Gemäß einer Ausführungsform ist die Erkennungseinrichtung ferner ausgebildet, das digitale Referenzgesichtsbild der Person und das digitale Gesichtsbild der Person auf einen gemeinsamen Skalierungsmaßstab zu skalieren, und/oder das digitale Referenzgesichtsbild der Person und das digitale Gesichtsbild der Person auf eine gemeinsame Ausrichtungsachse zu drehen. Dadurch wird der Vorteil erreicht, dass die jeweiligen Manipulationsindikatoren effizienter bestimmt werden können.

Gemäß einer Ausführungsform ist die Erkennungseinrichtung ferner ausgebildet, das digitale Referenzgesichtsbild der Person und das digitale Gesichtsbild der Person auf einen vorbestimmten Bildausschnitt zu beschneiden. Der vorbestimmte Bildausschnitt kann beispielsweise einen Bereich an den Augen der Person, der Nase der Person, insbesondere der Nasenspitze der Person, dem Mund der Person, den Ohren der Person, einem Bart der Person, Haaren der Person, einer Brille der Person, insbesondere einer Brillenbegrenzung, oder einem Gesichtsrand der Person umfassen. Dadurch wird der Vorteil erreicht, dass die jeweiligen Manipulationsindikatoren effizienter bestimmt werden können.

Gemäß einem zweiten Aspekt betrifft die Erfindung ein Zutrittskontrollsystem, welches eine Vorrichtung gemäß dem ersten Aspekt der Erfindung umfasst. Das Zutrittskontrollsystem kann beispielsweise an einem Grenzübergang zur Grenzkontrolle angeordnet sein.

Gemäß einer Ausführungsform umfasst das Zutrittskontrollsystem ferner eine Authentifizierungsvorrichtung, welche ausgebildet ist, die Person auf der Basis des digitalen Referenzgesichtsbildes und des digitalen Gesichtsbildes zu authentifizieren. Dadurch wird der Vorteil erreicht, dass das Zutrittskontrollsystem zusätzlich eine Authentifizierung der Person durchführen kann, um einen Zutritt zu gewähren.

Gemäß einem dritten Aspekt betrifft die Erfindung ein Verfahren zum Erkennen einer Bildmanipulation in einem digitalen Referenzgesichtsbild einer Person gemäß Anspruch 10.

Das Verfahren kann durch die Vorrichtung gemäß dem ersten Aspekt der Erfindung durchgeführt werden. Weitere Merkmale des Verfahrens resultieren unmittelbar aus den Merkmalen oder der Funktionalität der Vorrichtung gemäß dem ersten Aspekt der Erfindung.

Gemäß einem vierten Aspekt betrifft die Erfindung ein Computerprogramm mit einem Programmcode zum Durchführen des Verfahrens gemäß dem dritten Aspekt der Erfindung, wenn der Programmcode durch eine Vorrichtung ausgeführt wird. Die Vorrichtung, insbesondere die Erkennungseinrichtung, kann programmtechnisch eingerichtet sein, um den Programmcode auszuführen.

Die Erfindung kann in Hardware und/oder in Software realisiert werden.

### BESCHREIBUNG DER FIGUREN

Weitere Ausführungsbeispiele werden bezugnehmend auf die beiliegenden Zeichnungen näher erläutert. Es zeigen:
Fig. 1 ein schematisches Diagramm einer Vorrichtung zum Erkennen einer Bildmanipulation in einem digitalen Referenzgesichtsbild einer Person;
Fig. 2 ein schematisches Diagramm eines Zutrittskontrollsystems mit einer Vorrichtung zum Erkennen einer Bildmanipulation in einem digitalen Referenzgesichtsbild einer Person; und
Fig. 3 ein schematisches Diagramm eines Verfahrens zum Erkennen einer Bildmanipulation in einem digitalen Referenzgesichtsbild einer Person.

### DETAILIERTE BESCHREIBUNG DER FIGUREN

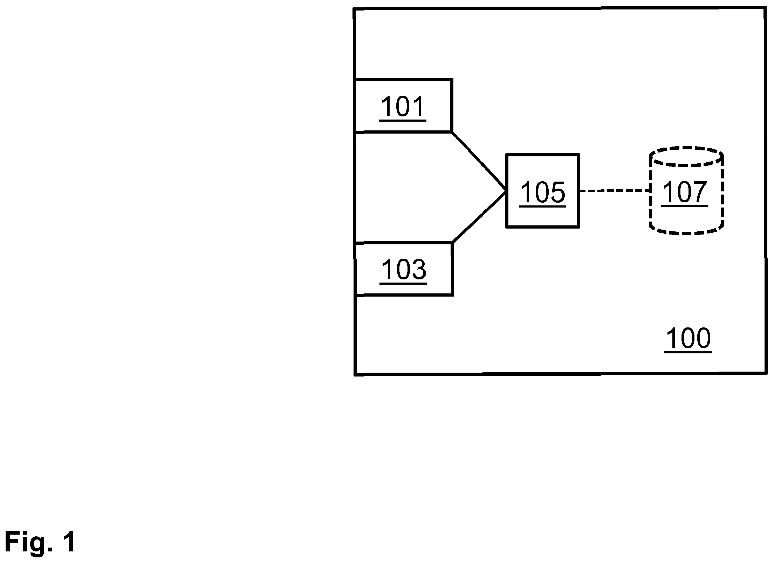

Fig. 1 zeigt ein schematisches Diagramm einer Vorrichtung 100 zum Erkennen einer Bildmanipulation in einem digitalen Referenzgesichtsbild einer Person, wobei das digitale Referenzgesichtsbild der Person in einem Identitätsdokument der Person gespeichert ist. Die Vorrichtung 100 kann beispielsweise eine Erkennung erlauben, ob das digitale Referenzgesichtsbild der Person anderweitig nicht gemäß dem ICAO TR Portrait Quality Standard verändert wurde.

Die Vorrichtung 100 umfasst einen Dokumentenleser 101, welcher ausgebildet ist, das digitale Referenzgesichtsbild der Person aus dem Identitätsdokument der Person auszulesen. Das Identitätsdokument kann einen elektronischen Speicher umfassen, in welchem das digitale Referenzgesichtsbild gespeichert ist. Das digitale Referenzgesichtsbild kann einer vorbestimmten Datengruppe, beispielsweise der Datengruppe 2 (DG2) im Falle eines Reisepasses, zugeordnet sein. Das Auslesen des digitalen Referenzgesichtsbildes durch den Dokumentenleser 101 kann drahtlos oder drahtgebunden erfolgen.

Die Vorrichtung 100 umfasst ferner einen Bildsensor 103, welche ausgebildet ist, ein digitales Gesichtsbild der Person zu erfassen. Der Bildsensor 103 kann beispielsweise eine Bildkamera oder eine Videokamera sein. Die Videokamera kann ein Video mit einer Mehrzahl von Bildframes bereitstellen, wobei das digitale Gesichtsbild durch einen Bildframe gebildet oder in einem Bildframe enthalten sein kann. Das beschriebene Konzept kann folglich für mehrere Bildframes wiederholt werden.

Die Vorrichtung 100 umfasst ferner eine Erkennungseinrichtung 105, welche ausgebildet ist, ein biometrisches Referenzmerkmal in dem digitalen Referenzgesichtsbild zu erfassen, ein biometrisches Merkmal in dem digitalen Gesichtsbild der Person zu erfassen, das biometrische Referenzmerkmal mit dem biometrischen Merkmal zu vergleichen, um einen ersten Manipulationsindikator zu erhalten, und die Bildmanipulation in dem digitalen Referenzgesichtsbild auf der Basis des ersten Manipulationsindikators zu erkennen. Zusammenfassend wird ein biometrischer Vergleich des digitalen Referenzgesichtsbildes und des digitalen Gesichtsbildes durchgeführt.

Die Erkennungseinrichtung 105 kann ferner ausgebildet sein, ein weiteres biometrisches Referenzmerkmal in dem digitalen Referenzgesichtsbild zu erfassen, ein weiteres biometrisches Merkmal in dem digitalen Gesichtsbild der Person zu erfassen, das weitere biometrische Referenzmerkmal mit dem weiteren biometrischen Merkmal zu vergleichen, um einen zweiten Manipulationsindikator zu erhalten, und die Bildmanipulation in dem digitalen Referenzgesichtsbild ferner auf der Basis des zweiten Manipulationsindikators zu erkennen. Das biometrische Merkmal und das weitere biometrische Merkmal können unterschiedlich sein. Das biometrische Referenzmerkmal und das weitere biometrische Referenzmerkmal können unterschiedlich sein.

Die Vorrichtung 100 umfasst ferner eine Datenbank 107, in welcher ein biometrisches Vergleichsreferenzmerkmal gespeichert ist, wobei die Erkennungseinrichtung 105 ferner ausgebildet ist, das biometrische Referenzmerkmal mit dem biometrischen Vergleichsreferenzmerkmal zu vergleichen, um einen dritten Manipulationsindikator zu erhalten, und die Bildmanipulation in dem digitalen Referenzgesichtsbild ferner auf der Basis des dritten Manipulationsindikators zu erkennen. Zusammenfassend kann ein biometrischer Vergleich bzw. ein biometrisches Thresholding gegen das vorgespeicherte biometrische Vergleichsreferenzmerkmal durchgeführt werden. Das biometrische Vergleichsreferenzmerkmal kann eine typische biometrische Eigenschaft menschlicher Gesichter repräsentieren. Je größer der Unterschied ist, desto höher ist die Konfidenz bzw. Wahrscheinlichkeit für eine Bildmanipulation.

Die Erkennungseinrichtung 105 kann ferner ausgebildet sein, das digitale Referenzgesichtsbild in einen Transformationsraum, insbesondere einen Frequenzraum, zu transformieren, um ein transformiertes digitales Referenzgesichtsbild zu erhalten, das digitale Gesichtsbild in den Transformationsraum, insbesondere den Frequenzraum, zu transformieren, um ein transformiertes digitales Gesichtsbild zu erhalten, das transformierte digitale Referenzgesichtsbild mit dem transformierten digitalen Gesichtsbild zu vergleichen, um einen vierten Manipulationsindikator zu erhalten, und die Bildmanipulation in dem digitalen Referenzgesichtsbild ferner auf der Basis des vierten Manipulationsindikators zu erkennen. Beispielsweise kann untersucht werden, ob das digitale Referenzgesichtsbild und das digitale Gesichtsbild gleichartig homogen strukturiert sind und ob in den verschiedenen Bereichen, beispielsweise im Hintergrund, im Vordergrund, im Gesicht, oder in ausgewählten Gesichtsbereichen, die jeweiligen Struktureigenschaften vorbestimmten Kriterien entsprechen. Insbesondere können dabei die Bildbereiche um die Augen, die Nase und/oder den Mund der Person sowie die Ränder des Gesichtes der Person betrachtet werden.

Die Erkennungseinrichtung 105 kann ferner ausgebildet sein, ein Referenzbildmerkmal in dem digitalen Referenzgesichtsbild zu erfassen, ein Bildmerkmal in dem digitalen Gesichtsbild zu erfassen, eine Differenz zwischen einer Referenzlage des Referenzbildmerkmals in dem digitalen Referenzgesichtsbild und einer Lage des Bildmerkmals in dem digitalen Gesichtsbild zu bestimmen, um einen fünften Manipulationsindikator zu erhalten, und die Bildmanipulation in dem digitalen Referenzgesichtsbild ferner auf der Basis des fünften Manipulationsindikators zu erkennen. Zum Bestimmen des Referenzbildmerkmals und/oder des Bildmerkmals kann beispielsweise ein Merkmalsextraktionsalgorithmus eingesetzt werden. Zusammenfassend können charakteristische Eigenschaften des digitalen Referenzgesichtsbildes und des digitalen Gesichtsbildes untersucht werden.

Gemäß einer Ausführungsform werden eine Mehrzahl von Referenzbildmerkmalen in dem digitalen Referenzgesichtsbild und eine Mehrzahl von Bildmerkmalen in dem digitalen Gesichtsbild erfasst. Nach einer Filterung kann untersucht werden, ob die jeweilige Anzahl von Referenzbildmerkmalen bzw. Bildmerkmalen, und/oder die Differenzen der Referenzlagen bzw. Lagen übereinstimmen. Ferner kann untersucht werden, ob sich eine Verteilung von Zusammenhangskomponenten des digitalen Referenzgesichtsbildes und des digitalen Gesichtsbildes voneinander unterscheiden.

Die Erkennungseinrichtung 105 kann ferner ausgebildet sein, eine Bildmanipulation unter Verwendung des digitalen Referenzgesichtsbildes und des digitalen Gesichtsbildes durchzuführen, um ein manipuliertes digitales Referenzgesichtsbild zu erhalten, das digitale Referenzgesichtsbild mit dem manipulierten digitalen Referenzgesichtsbild zu vergleichen, um einen sechsten Manipulationsindikator zu erhalten, und die Bildmanipulation in dem digitalen Referenzgesichtsbild ferner auf der Basis des sechsten Manipulationsindikators zu erkennen. Zusammenfassend kann untersucht werden, wie sich das digitale Referenzgesichtsbild verändern würde, wenn dieses unter Verwendung des digitalen Gesichtsbildes manipuliert wird.

Die Erkennungseinrichtung 105 kann ferner ausgebildet sein, einen Grad eines Verzerrungsartefakts der Bildmanipulation, insbesondere einer Doppelung oder einer Verschmierung, in dem digitalen Referenzgesichtsbild zu erfassen, um einen siebten Manipulationsindikator zu erhalten, und die Bildmanipulation in dem digitalen Referenzgesichtsbild ferner auf der Basis des siebten Manipulationsindikators zu erkennen. Derartige Verzerrungsartefakte können insbesondere im Bereich der Iriden, der Augenränder, der Brauen, der Wimpern, der Haaransätzen, der Lippen, der Mundwinkel, der Nasenlöcher, oder der Beugungen an einem Brillenrand erfasst werden.

Die Erkennungseinrichtung 105 kann ferner ausgebildet sein, ein statistisches Referenzmerkmal in dem digitalen Referenzgesichtsbild zu erfassen, ein statistisches Merkmal in dem digitalen Gesichtsbild der Person zu erfassen, das statistische Referenzmerkmal mit dem statistischen Merkmal zu vergleichen, um einen achten Manipulationsindikator zu erhalten, und die Bildmanipulation in dem digitalen Referenzgesichtsbild ferner auf der Basis des achten Manipulationsindikators zu erkennen. Das statistische Referenzmerkmal und das statistische Merkmal können ein Rauschen in dem digitalen Referenzgesichtsbild und in dem digitalen Gesichtsbild repräsentieren.

Die Erkennungseinrichtung 105 kann ferner ausgebildet sein, das digitale Referenzgesichtsbild der Person und das digitale Gesichtsbild der Person auf einen gemeinsamen Skalierungsmaßstab zu skalieren, und/oder das digitale Referenzgesichtsbild der Person und das digitale Gesichtsbild der Person auf eine gemeinsame Ausrichtungsachse zu drehen. Die Erkennungseinrichtung 105 kann ferner ausgebildet sein, das digitale Referenzgesichtsbild der Person und das digitale Gesichtsbild der Person auf einen vorbestimmten Bildausschnitt zu beschneiden. Der vorbestimmte Bildausschnitt kann beispielsweise einen Bereich an den Augen der Person, der Nase der Person, insbesondere der Nasenspitze der Person, dem Mund der Person, den Ohren der Person, einem Bart der Person, Haaren der Person, einer Brille der Person, insbesondere einer Brillenbegrenzung, oder einem Gesichtsrand der Person umfassen.

Die vorstehenden Ansätze zur Bestimmung des ersten Manipulationsindikators, des zweiten Manipulationsindikators, des dritten Manipulationsindikators, des vierten Manipulationsindikators, des fünften Manipulationsindikators, des sechsten Manipulationsindikators, des siebten Manipulationsindikators, und des achten Manipulationsindikators können in beliebiger Kombination angewendet werden. Gemäß einer Ausführungsform, die nicht der beanspruchten Erfindung entspricht, können beispielsweise lediglich der erste und der dritte Manipulationsindikator, oder lediglich der erste, der zweite, der fünfte und der siebte Manipulationsindikator bestimmt werden. Es können jedoch auch alle vorgenannten Manipulationsindikatoren bestimmt werden.

Eine gemeinsame Auswertung der verwendeten Manipulationsindikatoren kann dann beispielsweise mittels eines statistischen Ansatzes oder mittels eines neuronalen Netzes erfolgen. Die gemeinsame Auswertung soll im Folgenden beispielhaft bei Verwendung eines ersten, eines zweiten, und eines dritten Manipulationsindikators beschrieben werden.

Bei dem statistischen Ansatz ist die Erkennungseinrichtung 105 beispielsweise ausgebildet, eine Differenz des ersten Manipulationsindikators und eines vorbestimmten ersten Manipulationsreferenzwertes zu bestimmen, um einen ersten Differenzwert zu erhalten, eine Differenz des zweiten Manipulationsindikators und eines vorbestimmten zweiten Manipulationsreferenzwertes zu bestimmen, um einen zweiten Differenzwert zu erhalten, eine Differenz des dritten Manipulationsindikators und eines vorbestimmten dritten Manipulationsreferenzwertes zu bestimmen, um einen dritten Differenzwert zu erhalten, eine Summe des ersten Differenzwertes, des zweiten Differenzwertes und des dritten Differenzwertes zu bestimmen, um einen Summenwert zu erhalten, und die Bildmanipulation in dem digitalen Referenzgesichtsbild zu erkennen falls der Summenwert einen vorbestimmten Summenschwellenwert überschreitet.

Gemäß der Erfindung, ist die Erkennungseinrichtung 105 ausgebildet, die Bildmanipulation in dem digitalen Referenzgesichtsbild unter Verwendung des neuronalen Netzes zu erkennen, wobei das neuronale Netz eine Eingangsschicht mit einem ersten Eingang, einem zweiten Eingang und einem dritten Eingang aufweist, wobei das neuronale Netz eine Ausgangsschicht mit einem Ausgang aufweist, wobei der erste Manipulationsindikator dem ersten Eingang zugeordnet ist, wobei der zweite Manipulationsindikator dem zweiten Eingang zugeordnet ist, wobei der dritte Manipulationsindikator dem dritten Eingang zugeordnet ist, und wobei der Ausgang die Bildmanipulation in dem digitalen Referenzgesichtsbild anzeigt. Mittels des neuronalen Netzes wird folglich untersucht, ob das digitale Referenzgesichtsbild manipuliert wurde.

Die Vorrichtung 100 kann die Erkennung der Bildmanipulation automatisiert durchführen und beispielsweise als unterstützendes Werkzeug für einen Anwender eingesetzt werden. Dies kann beispielsweise dadurch geschehen, dass der Anwender zu einem Bereich geführt wird, in welchem durch die Vorrichtung 100 eine Bildmanipulation entdeckt wurde. Ferner kann beispielsweise in diesen Bereich hineingezoomt werden. Je nach Anwendungsfall kann der geübte oder ungeübte Anwender somit in die Lage versetzt werden, das digitale Referenzgesichtsbild zusätzlich manuell auf Bildmanipulationen bzw. Anomalien hin zu untersuchen.

Auch eine umgekehrte Vorgehensweise ist möglich, bei der der Anwender vorab einen verdächtigen Bereich in dem digitalen Referenzgesichtsbild markiert, welcher dann durch die Vorrichtung 100 untersucht wird, oder der Anwender vorab bestimmte Bereiche ausschließt. Dies kann beispielsweise dann vorteilhaft sein, wenn bereits bekannt ist, dass bestimmte Bereiche absichtlich und in zulässiger Weise verändert wurden.

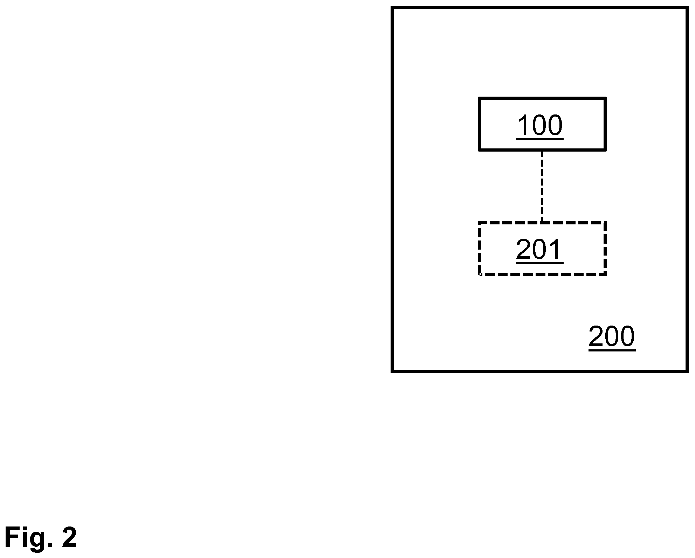

Fig. 2 zeigt ein schematisches Diagramm eines Zutrittskontrollsystems 200 mit einer Vorrichtung 100 zum Erkennen einer Bildmanipulation in einem digitalen Referenzgesichtsbild einer Person. Das Zutrittskontrollsystem 200 kann ferner eine Authentifizierungsvorrichtung 201 umfassen, welche ausgebildet ist, die Person auf der Basis des digitalen Referenzgesichtsbildes und des digitalen Gesichtsbildes zu authentifizieren. Die Authentifizierung der Person kann unter Verwendung bekannter Authentifizierungsansätze erfolgen.

Das Zutrittskontrollsystem 200 kann ein Automated Border Control (ABC) Gate bilden. Das Zutrittskontrollsystem 200 kann beispielsweise an einem Grenzübergang angeordnet sein, und sowohl eine Erkennung einer Bildmanipulation in dem digitalen Referenzgesichtsbild der Person als auch eine Authentifizierung der Person durchführen.

Durch die Vorrichtung 100 kann beispielsweise die Effizienz und Zuverlässigkeit des Zutrittskontrollsystems 200 erhöht werden. Darüber hinaus kann in dem Zutrittskontrollsystem 200 die Sicherheit erhöht werden. Insbesondere kann durch das Zutrittskontrollsystem 200 festgestellt werden, ob das in dem Identitätsdokument gespeicherte digitale Referenzgesichtsbild durch eine Bildmanipulation entstanden ist und dieses Identitätsdokument damit potenziell von mehreren Personen verwendet werden kann.

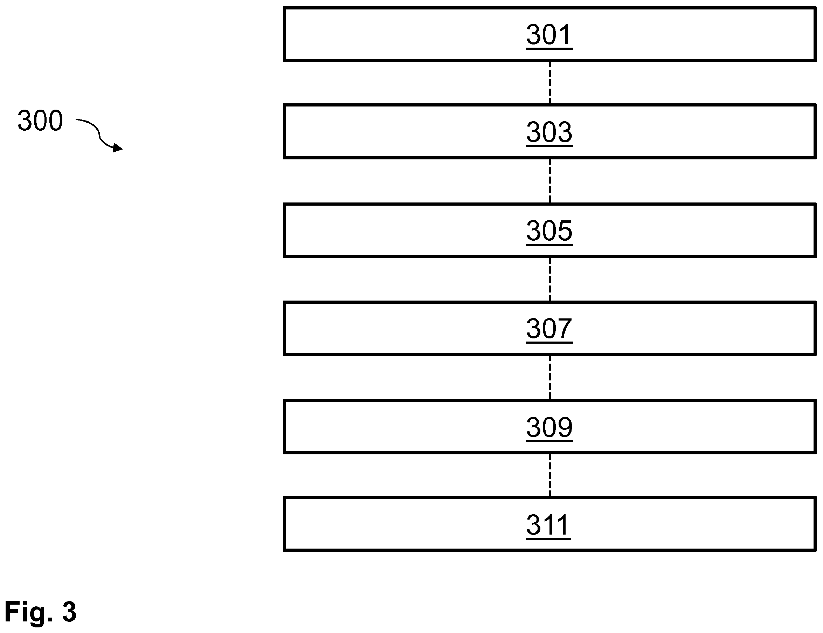

Fig. 3 zeigt ein schematisches Diagramm eines Verfahrens 300 zum Erkennen einer Bildmanipulation in einem digitalen Referenzgesichtsbild einer Person, wobei das digitale Referenzgesichtsbild der Person in einem Identitätsdokument der Person gespeichert ist.

Das Verfahren 300 umfasst ein Auslesen 301 des digitalen Referenzgesichtsbild der Person aus dem Identitätsdokument der Person durch einen Dokumentenleser, ein Erfassen 303 eines digitalen Gesichtsbildes der Person durch einen Bildsensor, ein Erfassen 305 eines biometrischen Referenzmerkmals in dem digitalen Referenzgesichtsbild durch eine Erkennungseinrichtung, ein Erfassen 307 eines biometrischen Merkmals in dem digitalen Gesichtsbild der Person durch die Erkennungseinrichtung, ein Vergleichen 309 des biometrischen Referenzmerkmals mit dem biometrischen Merkmal durch die Erkennungseinrichtung, um einen Manipulationsindikator zu erhalten, und ein Erkennen 311 der Bildmanipulation in dem digitalen Referenzgesichtsbild auf der Basis des Manipulationsindikators durch die Erkennungseinrichtung.

Das Verfahren 300 kann unter Verwendung eines Computerprogramms mit einem Programmcode durchgeführt werden. Die Vorrichtung kann programmtechnisch eingerichtet sein, um den Programmcode auszuführen.

Alle in Verbindung mit einzelnen Ausführungsformen der Erfindung gezeigten oder beschriebenen Merkmale können in beliebiger Kombination in dem erfindungsgemäßen Gegenstand vorgesehen sein, um gleichzeitig deren vorteilhaften Wirkungen zu realisieren.

### BEZUGSZEICHENLISTE

- 100: Vorrichtung
- 101: Dokumentenleser
- 103: Bildsensor
- 105: Erkennungseinrichtung
- 107: Datenbank

- 200: Zutrittskontrollsystem
- 201: Authentifizierungsvorrichtung

- 300: Verfahren
- 301: Auslesen
- 303: Erfassen
- 305: Erfassen
- 307: Erfassen
- 309: Vergleichen
- 311: Erkennen

## Patentansprüche

1. Vorrichtung (100) zum Erkennen einer Bildmanipulation in einem digitalen Referenzgesichtsbild einer Person, wobei das digitale Referenzgesichtsbild der Person in einem Identitätsdokument der Person gespeichert ist, mit:
einem Dokumentenleser (101), welcher ausgebildet ist, das digitale Referenzgesichtsbild der Person aus dem Identitätsdokument der Person auszulesen;
einem Bildsensor (103), welcher ausgebildet ist, ein digitales Gesichtsbild der Person zu erfassen; und
einer Erkennungseinrichtung (105), welche ausgebildet ist, ein biometrisches Referenzmerkmal in dem digitalen Referenzgesichtsbild zu erfassen, ein biometrisches Merkmal in dem digitalen Gesichtsbild der Person zu erfassen, das biometrische Referenzmerkmal mit dem biometrischen Merkmal zu vergleichen, um einen ersten Manipulationsindikator zu erhalten, und die Bildmanipulation in dem digitalen Referenzgesichtsbild auf der Basis des ersten Manipulationsindikators zu erkennen,
einer Datenbank (107), in welcher ein biometrisches Vergleichsreferenzmerkmal gespeichert ist;
wobei die Erkennungseinrichtung (105) ferner ausgebildet ist, das biometrische Referenzmerkmal mit dem biometrischen Vergleichsreferenzmerkmal zu vergleichen, um einen dritten Manipulationsindikator zu erhalten, und die Bildmanipulation in dem digitalen Referenzgesichtsbild ferner auf der Basis des dritten Manipulationsindikators zu erkennen,
wobei die Manipulationsindikatoren einen Grad der Bildmanipulation in dem digitalen Referenzgesichtsbild repräsentieren, wobei die Manipulationsindikatoren eine Konfidenz für das Vorliegen der Bildmanipulation repräsentieren, wobei je größer der Unterschied ist, desto höher ist die Konfidenz für eine Bildmanipulation,
wobei die Bildmanipulation eine der folgenden Bildmanipulationen umfasst: ein Morphing, bei welchem ein Zwischenübergang zwischen unterschiedlichen digitalen Referenzgesichtsbildern berechnet wird, eine geometrische Bildverzerrung oder eine Texturveränderung,
wobei die Erkennungseinrichtung (105) ferner ausgebildet ist, ein weiteres biometrisches Referenzmerkmal in dem digitalen Referenzgesichtsbild zu erfassen, ein weiteres biometrisches Merkmal in dem digitalen Gesichtsbild der Person zu erfassen, das weitere biometrische Referenzmerkmal mit dem weiteren biometrischen Merkmal zu vergleichen, um einen zweiten Manipulationsindikator zu erhalten, und die Bildmanipulation in dem digitalen Referenzgesichtsbild ferner auf der Basis des zweiten Manipulationsindikators zu erkennen,
wobei die Erkennungseinrichtung (105) ferner ausgebildet ist, die Bildmanipulation in dem digitalen Referenzgesichtsbild unter Verwendung eines neuronalen Netzes zu erkennen,
wobei das neuronale Netz eine Eingangsschicht mit einem ersten Eingang, einem zweiten Eingang und einem dritten Eingang aufweist, wobei das neuronale Netz eine Ausgangsschicht mit einem Ausgang aufweist, wobei der erste Manipulationsindikator dem ersten Eingang zugeordnet ist, wobei der zweite Manipulationsindikator dem zweiten Eingang zugeordnet ist, wobei der dritte Manipulationsindikator dem dritten Eingang zugeordnet ist, und wobei der Ausgang die Bildmanipulation in dem digitalen Referenzgesichtsbild anzeigt.

2. Vorrichtung (100) nach Anspruch 1, wobei das biometrische Merkmal eines der folgenden biometrischen Merkmale ist: ein Augenabstand der Person, eine Augenfarbe der Person, eine Augenbreite der Person, eine Augenhöhe der Person, eine Nasenhöhe der Person, eine Nasenbreite der Person, ein Ohrenabstand der Person, eine Ohrenbreite der Person, eine Ohrenhöhe der Person, eine Mundhöhe der Person, eine Mundbreite der Person, eine Stirnhöhe der Person, eine Stirnbreite der Person, oder ein Wangenabstand der Person.

3. Vorrichtung (100) nach einem der vorstehenden Ansprüche, wobei die Erkennungseinrichtung (105) ferner ausgebildet ist, das digitale Referenzgesichtsbild in einen Transformationsraum, insbesondere einen Frequenzraum, zu transformieren, um ein transformiertes digitales Referenzgesichtsbild zu erhalten, das digitale Gesichtsbild in den Transformationsraum, insbesondere den Frequenzraum, zu transformieren, um ein transformiertes digitales Gesichtsbild zu erhalten, das transformierte digitale Referenzgesichtsbild mit dem transformierten digitalen Gesichtsbild zu vergleichen, um einen vierten Manipulationsindikator zu erhalten, und die Bildmanipulation in dem digitalen Referenzgesichtsbild ferner auf der Basis des vierten Manipulationsindikators zu erkennen.

4. Vorrichtung (100) nach Anspruch 3, wobei die Erkennungseinrichtung (105) ferner ausgebildet ist, ein Referenzbildmerkmal in dem digitalen Referenzgesichtsbild zu erfassen, ein Bildmerkmal in dem digitalen Gesichtsbild zu erfassen, eine Differenz zwischen einer Referenzlage des Referenzbildmerkmals in dem digitalen Referenzgesichtsbild und einer Lage des Bildmerkmals in dem digitalen Gesichtsbild zu bestimmen, um einen fünften Manipulationsindikator zu erhalten, und die Bildmanipulation in dem digitalen Referenzgesichtsbild ferner auf der Basis des fünften Manipulationsindikators zu erkennen.

5. Vorrichtung (100) nach Anspruch 4, wobei das Bildmerkmal eines der folgenden Bildmerkmale ist: eine Ecke in dem digitalen Gesichtsbild, oder eine Kante in dem digitalen Gesichtsbild.

6. Vorrichtung (100) nach Anspruch 4, wobei die Erkennungseinrichtung (105) ferner ausgebildet ist, eine Bildmanipulation unter Verwendung des digitalen Referenzgesichtsbildes und des digitalen Gesichtsbildes durchzuführen, um ein manipuliertes digitales Referenzgesichtsbild zu erhalten, das digitale Referenzgesichtsbild mit dem manipulierten digitalen Referenzgesichtsbild zu vergleichen, um einen sechsten Manipulationsindikator zu erhalten, und die Bildmanipulation in dem digitalen Referenzgesichtsbild ferner auf der Basis des sechsten Manipulationsindikators zu erkennen.

7. Vorrichtung (100) nach einem der vorstehenden Ansprüche, wobei die Erkennungseinrichtung (105) ferner ausgebildet ist, das digitale Referenzgesichtsbild der Person und das digitale Gesichtsbild der Person auf einen gemeinsamen Skalierungsmaßstab zu skalieren, oder das digitale Referenzgesichtsbild der Person und das digitale Gesichtsbild der Person auf eine gemeinsame Ausrichtungsachse zu drehen.

8. Vorrichtung (100) nach einem der vorstehenden Ansprüche, wobei die Erkennungseinrichtung (105) ferner ausgebildet ist, das digitale Referenzgesichtsbild der Person und das digitale Gesichtsbild der Person auf einen vorbestimmten Bildausschnitt zu beschneiden.

9. Zutrittskontrollsystem (200), mit:
einer Vorrichtung (100) nach einem der vorstehenden Ansprüche.

10. Verfahren (300) zum Erkennen einer Bildmanipulation in einem digitalen Referenzgesichtsbild einer Person, wobei das digitale Referenzgesichtsbild der Person in einem Identitätsdokument der Person gespeichert ist, mit:
Auslesen (301) des digitalen Referenzgesichtsbild der Person aus dem Identitätsdokument der Person durch einen Dokumentenleser (101);
Erfassen (303) eines digitalen Gesichtsbildes der Person durch einen Bildsensor (103);
Erfassen (305) eines biometrischen Referenzmerkmals in dem digitalen Referenzgesichtsbild durch eine Erkennungseinrichtung (105);
Erfassen (307) eines biometrischen Merkmals in dem digitalen Gesichtsbild der Person durch die Erkennungseinrichtung (105);
Vergleichen (309) des biometrischen Referenzmerkmals mit dem biometrischen Merkmal durch die Erkennungseinrichtung (105), um einen ersten Manipulationsindikator zu erhalten; und
Erkennen (311) der Bildmanipulation in dem digitalen Referenzgesichtsbild auf der Basis des ersten Manipulationsindikators durch die Erkennungseinrichtung (105),
Vergleichen des biometrischen Referenzmerkmals mit einem in einer Datenbank (107) gespeicherten biometrischen Vergleichsreferenzmerkmal durch die Erkennungseinrichtung (105), um einen dritten Manipulationsindikator zu erhalten,
Erkennen der Bildmanipulation in dem digitalen Referenzgesichtsbild ferner auf der Basis des dritten Manipulationsindikators durch die Erkennungseinrichtung (105),
Erfassen eines weiteren biometrischen Referenzmerkmals in dem digitalen Referenzgesichtsbild und eines weiteren biometrischen Merkmals in dem digitalen Gesichtsbild der Person durch die Erkennungseinrichtung (105),
Vergleichen des weiteren biometrischen Referenzmerkmals mit dem weiteren biometrischen Merkmal durch die Erkennungseinrichtung (105), um einen zweiten Manipulationsindikator zu erhalten,
Erkennen der Bildmanipulation in dem digitalen Referenzgesichtsbild ferner auf der Basis des zweiten Manipulationsindikators durch die Erkennungseinrichtung (105),
wobei die Manipulationsindikatoren einen Grad der Bildmanipulation in dem digitalen Referenzgesichtsbild repräsentieren, wobei die Manipulationsindikatoren eine Konfidenz für das Vorliegen der Bildmanipulation repräsentieren, wobei je größer der Unterschied ist, desto höher ist die Konfidenz für eine Bildmanipulation,
wobei die Bildmanipulation eine der folgenden Bildmanipulationen umfasst: ein Morphing, bei welchem ein Zwischenübergang zwischen unterschiedlichen digitalen Referenzgesichtsbildern berechnet wird, eine geometrische Bildverzerrung oder eine Texturveränderung,
Erkennen der Bildmanipulation in dem digitalen Referenzgesichtsbild durch die Erkennungseinrichtung (105) unter Verwendung eines neuronalen Netzes, wobei das neuronale Netz eine Eingangsschicht mit einem ersten Eingang, einem zweiten Eingang und einem dritten Eingang aufweist, wobei das neuronale Netz eine Ausgangsschicht mit einem Ausgang aufweist, wobei der erste Manipulationsindikator dem ersten Eingang zugeordnet ist, wobei der zweite Manipulationsindikator dem zweiten Eingang zugeordnet ist, wobei der dritte Manipulationsindikator dem dritten Eingang zugeordnet ist, und wobei der Ausgang die Bildmanipulation in dem digitalen Referenzgesichtsbild anzeigt.

11. Computerprogramm mit einem Programmcode zum Durchführen des Verfahrens (300) nach Anspruch 10, wenn der Programmcode durch eine Vorrichtung (100) ausgeführt wird.

## Claims

1. Device (100) for detecting an image manipulation in a digital reference face image of a person, wherein the digital reference face image of the person is stored in an identity document of the person, the device (100) comprising:
a document reader (101), which is configured to read the digital reference face image of the person from the identity document of the person;
an image sensor (103), which is configured to capture a digital face image of the person; and
a detection device (105), which is configured to capture a biometric reference feature in the digital reference face image, to capture a biometric feature in the digital face image of the person, to compare the biometric reference feature with the biometric feature in order to obtain a first manipulation indicator, and to detect the image manipulation in the digital reference face image on the basis of the first manipulation indicator,
a database (107), in which a biometric comparison reference feature is stored;
wherein the detection device (105) is further configured to compare the biometric reference feature with the biometric comparison reference feature in order to obtain a third manipulation indicator, and to further detect the image manipulation in the digital reference face image on the basis of the third manipulation indicator,
wherein the manipulation indicators represent a degree of image manipulation in the digital reference face image, wherein the manipulation indicators represent a confidence for the presence of the image manipulation, wherein the greater the difference, the higher the confidence for an image manipulation,
wherein the image manipulation comprises one of the following image manipulations: a morphing, in which an intermediate transition between different digital reference face images is calculated, a geometric image distortion, or a texture alteration,
wherein the detection device (105) is further configured to capture a further biometric reference feature in the digital reference face image, to capture a further biometric feature in the digital face image of the person, to compare the further biometric reference feature with the further biometric feature in order to obtain a second manipulation indicator, and to further detect the image manipulation in the digital reference face image on the basis of the second manipulation indicator,
wherein the detection device (105) is further configured to detect the image manipulation in the digital reference face image using a neural network, wherein the neural network has an input layer with a first input, a second input and a third input, wherein the neural network has an output layer with an output, wherein the first manipulation indicator is associated with the first input, wherein the second manipulation indicator is associated with the second input, wherein the third manipulation indicator is associated with the third input, and wherein the output indicates the image manipulation in the digital reference face image.

2. Device (100) according to claim 1, wherein the biometric feature is one of the following biometric features: an eye spacing of the person, an eye color of the person, an eye width of the person, an eye height of the person, a nose height of the person, a nose width of the person, an ear spacing of the person, an ear width of the person, an ear height of the person, a mouth height of the person, a mouth width of the person, a forehead height of the person, a forehead width of the person, or a cheek spacing of the person.

3. Device (100) according to one of the preceding claims, wherein the detection device (105) is further configured to transform the digital reference face image into a transformation space, in particular a frequency space, in order to obtain a transformed digital reference face image, to transform the digital face image into the transformation space, in particular the frequency space, in order to obtain a transformed digital face image, to compare the transformed digital reference face image with the transformed digital face image in order to obtain a fourth manipulation indicator, and to further detect the image manipulation in the digital reference face image on the basis of the fourth manipulation indicator.

4. Device (100) according to claim 3, wherein the detection device (105) is further configured to capture a reference image feature in the digital reference face image, to capture an image feature in the digital face image, to determine a difference between a reference position of the reference image feature in the digital reference face image and a position of the image feature in the digital face image in order to obtain a fifth manipulation indicator, and to detect the image manipulation in the digital reference face image further on the basis of the fifth manipulation indicator.

5. Device (100) according to claim 4, wherein the image feature is one of the following image features: a corner in the digital face image, or an edge in the digital face image.

6. Device (100) according to claim 4, wherein the detection device (105) is further configured to perform an image manipulation using the digital reference face image and the digital face image in order to obtain a manipulated digital reference face image, to compare the digital reference face image with the manipulated digital reference face image in order to obtain a sixth manipulation indicator, and to further detect the image manipulation in the digital reference face image on the basis of the sixth manipulation indicator.

7. Device (100) according to one of the preceding claims, wherein the detection device (105) is further configured to scale the digital reference face image of the person and the digital face image of the person to a common scale, or to rotate the digital reference face image of the person and the digital face image of the person to a common alignment axis.

8. Device (100) according to one of the preceding claims, wherein the detection device (105) is further configured to crop the digital reference face image of the person and the digital face image of the person to a predetermined image section.

9. Access control system (200), comprising:
a device (100) according to one of the preceding claims.

10. Method (300) for detecting an image manipulation in a digital reference face image of a person, wherein the digital reference face image of the person is stored in an identity document of the person, the method (300) comprising:
reading (301) the digital reference face image of the person from the identity document of the person by a document reader (101);
capturing (303) a digital face image of the person by an image sensor (103);
capturing (305) a biometric reference feature in the digital reference face image by a detection device (105);
capturing (307) a biometric feature in the digital face image of the person by the detection device (105);
comparing (309) the biometric reference feature with the biometric feature by the detection device (105) in order to obtain a first manipulation indicator; and
detecting (311) the image manipulation in the digital reference face image based on the first manipulation indicator by the detection device (105),
comparing the biometric reference feature with a biometric comparison reference feature stored in a database (107) by the detection device (105) in order to obtain a third manipulation indicator,
detecting the image manipulation in the digital reference face image further based on the third manipulation indicator by the detection device (105),
capturing a further biometric reference feature in the digital reference face image and a further biometric feature in the digital face image of the person by the detection device (105),
comparing the further biometric reference feature with the further biometric feature by the detection device (105) in order to obtain a second manipulation indicator,
detecting the image manipulation in the digital reference face image further based on the second manipulation indicator by the detection device (105),
wherein the manipulation indicators represent a degree of image manipulation in the digital reference face image, wherein the manipulation indicators represent a confidence for the presence of the image manipulation, wherein the greater the difference, the higher the confidence for an image manipulation,
wherein the image manipulation comprises one of the following image manipulations: a morphing, in which an intermediate transition between different digital reference face images is calculated, a geometric image distortion, or a texture alteration,
detecting the image manipulation in the digital reference face image by the detection device (105) using a neural network, wherein the neural network has an input layer with a first input, a second input and a third input, wherein the neural network has an output layer with an output, wherein the first manipulation indicator is associated with the first input, wherein the second manipulation indicator is associated with the second input, wherein the third manipulation indicator is associated with the third input, and wherein the output indicates the image manipulation in the digital reference face image.

11. Computer program comprising program code for performing the method (300) according to claim 10, when the program code is executed by a device (100).

## Revendications

1. Dispositif (100) de détection de manipulation d'image dans une image de référence numérique du visage d'une personne, cette image de référence numérique étant stockée dans un document d'identité de la personne, le dispositif (100) comprenant :
un lecteur de documents (101), configuré pour lire l'image de référence numérique du visage de la personne à partir du document d'identité de la personne ;
un capteur d'image (103), configuré pour capturer une image numérique du visage de la personne ; et
un dispositif de détection (105), configuré pour capturer une caractéristique biométrique de référence dans l'image numérique de référence du visage, pour capturer une caractéristique biométrique dans l'image numérique du visage de la personne, pour comparer la caractéristique biométrique de référence avec la caractéristique biométrique afin d'obtenir un premier indicateur de manipulation, et pour détecter la manipulation de l'image dans l'image numérique de référence du visage sur la base du premier indicateur de manipulation,
une base de données (107), dans laquelle est stockée une caractéristique de référence de comparaison biométrique ;
dans lequel le dispositif de détection (105) est en outre configuré pour comparer la caractéristique de référence biométrique avec la caractéristique de référence de comparaison biométrique afin d'obtenir un troisième indicateur de manipulation, et pour détecter en outre la manipulation d'image dans l'image faciale de référence numérique sur la base du troisième indicateur de manipulation,
dans lequel les indicateurs de manipulation représentent un degré de manipulation de l'image du visage de référence numérique, dans lequel les indicateurs de manipulation représentent une confiance quant à la présence de la manipulation de l'image, dans lequel plus la différence est grande, plus la confiance quant à une manipulation de l'image est élevée,
dans lequel la manipulation d'image comprend l'une des manipulations d'image suivantes : une morphologie, dans laquelle une transition intermédiaire entre différentes images de visage de référence numériques est calculée, une distorsion géométrique de l'image ou une modification de la texture,
dans lequel le dispositif de détection (105) est en outre configuré pour capturer une autre caractéristique biométrique de référence dans l'image faciale de référence numérique, pour capturer une autre caractéristique biométrique dans l'image faciale numérique de la personne, pour comparer la autre caractéristique biométrique de référence avec l'autre caractéristique biométrique afin d'obtenir un deuxième indicateur de manipulation, et pour détecter en outre la manipulation d'image dans l' image faciale de référence numérique sur la base du deuxième indicateur de manipulation,
dans lequel le dispositif de détection (105) est en outre configuré pour détecter la manipulation d'image dans l'image de visage de référence numérique à l'aide d'un réseau neuronal, dans lequel le réseau neuronal a une couche d'entrée avec une première entrée, une deuxième entrée et une troisième entrée, dans lequel le réseau neuronal a une couche de sortie avec une sortie, dans lequel le premier indicateur de manipulation est associé à la première entrée, dans lequel le deuxième indicateur de manipulation est associé à la deuxième entrée, dans lequel le troisième indicateur de manipulation est associé à la troisième entrée, et dans lequel la sortie indique la manipulation d'image dans l'image de visage de référence numérique.

2. Dispositif (100) selon la revendication 1, dans lequel la caractéristique biométrique est l'une des caractéristiques biométriques suivantes : l'écartement des yeux de la personne, la couleur des yeux de la personne, la largeur des yeux de la personne, la hauteur des yeux de la personne, la hauteur du nez de la personne, la largeur du nez de la personne, l'écartement des oreilles de la personne, la largeur des oreilles de la personne, la hauteur des oreilles de la personne, la hauteur de la bouche de la personne, la largeur de la bouche de la personne, la hauteur du front de la personne, la largeur du front de la personne ou l'écartement des joues de la personne.

3. Dispositif (100) selon l'une des revendications précédentes, dans lequel le dispositif de détection (105) est en outre configuré pour transformer l'image de référence numérique du visage en un espace de transformation, en particulier un espace de fréquence, afin d'obtenir une image de référence numérique du visage transformée, pour transformer l'image de référence numérique du visage en l'espace de transformation, en particulier l'espace de fréquence, afin d'obtenir une image de référence numérique du visage transformée, pour comparer l'image de référence numérique du visage transformée avec l'image de référence numérique du visage transformée afin d'obtenir un quatrième indicateur de manipulation, et pour détecter en outre la manipulation de l'image dans l'image de référence numérique du visage sur la base du quatrième indicateur de manipulation.

4. Dispositif (100) selon la revendication 3, dans lequel le dispositif de détection (105) est en outre configuré pour capturer une caractéristique d'image de référence dans l'image de visage de référence numérique, pour capturer une caractéristique d'image dans l'image de visage numérique, pour déterminer une différence entre une position de référence de la caractéristique d'image de référence dans l'image de visage de référence numérique et une position de la caractéristique d'image dans l'image de visage numérique afin d'obtenir un cinquième indicateur de manipulation, et pour détecter la manipulation d'image dans l'image de visage de référence numérique sur la base du cinquième indicateur de manipulation.

5. Dispositif (100) selon la revendication 4, dans lequel la caractéristique d'image est l'une des caractéristiques d'image suivantes : un coin dans l'image numérique du visage ou un bord dans l'image numérique du visage.

6. Dispositif (100) selon la revendication 4, dans lequel le dispositif de détection (105) est en outre configuré pour effectuer une manipulation d'image à l'aide de l'image de référence numérique du visage et de l'image de visage numérique afin d'obtenir une image de référence numérique du visage manipulée, pour comparer l'image de référence numérique du visage avec l'image de référence numérique du visage manipulée afin d'obtenir un sixième indicateur de manipulation, et pour détecter en outre la manipulation d'image dans l'image de référence numérique du visage sur la base du sixième indicateur de manipulation.

7. Dispositif (100) selon l'une des revendications précédentes, dans lequel le dispositif de détection (105) est en outre configuré pour mettre à l'échelle l'image de référence numérique du visage de la personne et l'image numérique du visage de la personne à une échelle commune, ou pour faire pivoter l'image de référence numérique du visage de la personne et l'image numérique du visage de la personne sur un axe d'alignement commun.

8. Dispositif (100) selon l'une des revendications précédentes, dans lequel le dispositif de détection (105) est en outre configuré pour recadrer l'image de référence numérique du visage de la personne et l'image numérique du visage de la personne à une section d'image prédéterminée.

9. Système de contrôle d'accès (200), comprenant :
un dispositif (100) selon l'une des revendications précédentes.

10. Procédé (300) de détection de la manipulation d'une image dans une image de référence numérique du visage d'une personne, dans lequel l'image de référence numérique du visage de la personne est stockée dans un document d'identité de la personne, le procédé (300) comprenant :
lecture (301) de l'image de référence numérique du visage de la personne à partir du document d'identité de la personne par un lecteur de documents (101) ;
capture (303) d'une image numérique du visage de la personne par un capteur d'image (103) ;
capture (305) d'une caractéristique de référence biométrique dans l'image faciale de référence numérique par un dispositif de détection (105) ;
capture (307) d'une caractéristique biométrique dans l'image numérique du visage de la personne par le dispositif de détection (105) ;
comparant (309) la caractéristique biométrique de référence avec la caractéristique biométrique du dispositif de détection (105) afin d'obtenir un premier indicateur de manipulation ; et
détection (311) de la manipulation de l'image dans l'image de référence numérique du visage basée sur le premier indicateur de manipulation par le dispositif de détection (105),
comparer la caractéristique de référence biométrique avec une caractéristique de référence de comparaison biométrique stockée dans une base de données (107) par le dispositif de détection (105) afin d'obtenir un troisième indicateur de manipulation,
détection de la manipulation d'image dans l'image de visage de référence numérique en se basant sur le troisième indicateur de manipulation par le dispositif de détection (105), capture d'une caractéristique biométrique de référence supplémentaire dans l'image faciale de référence numérique et d'une caractéristique biométrique supplémentaire dans l'image faciale numérique de la personne par le dispositif de détection (105),
comparer la caractéristique biométrique de référence supplémentaire avec la caractéristique biométrique supplémentaire par le dispositif de détection (105) afin d'obtenir un deuxième indicateur de manipulation,
détection de la manipulation d'image dans l'image de visage de référence numérique en se basant sur le deuxième indicateur de manipulation par le dispositif de détection (105),
dans lequel les indicateurs de manipulation représentent un degré de manipulation de l'image du visage de référence numérique, dans lequel les indicateurs de manipulation représentent une confiance quant à la présence de la manipulation de l'image, dans lequel plus la différence est grande, plus la confiance quant à une manipulation de l'image est élevée,
dans lequel la manipulation d'image comprend l'une des manipulations d'image suivantes : une morphologie, dans laquelle une transition intermédiaire entre différentes images de visage de référence numériques est calculée, une distorsion géométrique de l'image ou une modification de la texture,
détection de la manipulation d'image dans l'image de référence numérique du visage par le dispositif de détection (105) à l'aide d'un réseau neuronal, dans lequel le réseau neuronal a une couche d'entrée avec une première entrée, une deuxième entrée et une troisième entrée, dans lequel le réseau neuronal a une couche de sortie avec une sortie, dans lequel le premier indicateur de manipulation est associé à la première entrée, dans lequel le deuxième indicateur de manipulation est associé à la deuxième entrée, dans lequel le troisième indicateur de manipulation est associé à la troisième entrée, et dans lequel la sortie indique la manipulation d'image dans l'image de référence numérique du visage.

11. Programme informatique comprenant un code de programme pour exécuter la méthode (300) selon la revendication 10, lorsque le code de programme est exécuté par un dispositif (100).
